# EUROPEAN PATENT SPECIFICATION

(11) **EP 0 787 428 B1**
(45) Date of publication and mention of the grant of the patent: **11.07.2001**
(21) Application number: 97101234.9
(22) Date of filing: 27.01.1997
(51) Int. Cl.: A01K 87/00

(54) **Fishing rod with anti-slipping region**
Angelrute mit rutschfeste Griffteil
Canne à pêche ayant une partie antidérapante

(30) Priority: 30.01.1996 JP 3554696
(43) Date of publication of application: 06.08.1997
(73) Proprietor: DAIWA SEIKO INC., Higashikurume-shi, Tokyo (JP)
(72) Inventor: Hachiya, Masahisa, Hamilton ML3 7YD, Lanarkshire, Scotland (GB); Usuda, Toshikazu, Higashikurume-shi, Tokyo (JP)
(74) Representative: Grünecker, Kinkeldey, Stockmair & Schwanhäusser Anwaltssozietät

(56) References cited:
- FR-A- 2 568 819
- GB-A- 2 177 883
- US-A- 5 231 783
- PATENT ABSTRACTS OF JAPAN vol. 018, no. 334 (C-1216), 24 June 1994 & JP 06 078653 A (DAIWA SEIKO INC), 22 March 1994,
- PATENT ABSTRACTS OF JAPAN vol. 018, no. 533 (C-1259), 11 October 1994 & JP 06 189654 A (SHIMANO INC), 12 July 1994,
- PATENT ABSTRACTS OF JAPAN vol. 018, no. 562 (C-1265), 27 October 1994 & JP 06 205861 A (DAIWA GOLF KK), 26 July 1994,
- PATENT ABSTRACTS OF JAPAN vol. 095, no. 003, 28 April 1995 & JP 06 343374 A (SHIMANO INC), 20 December 1994,
- PATENT ABSTRACTS OF JAPAN vol. 006, no. 113 (M-138), 24 June 1982 & JP 57 041919 A (ORIMUPITSUKU:KK), 9 March 1982,

## Description

This invention relates to a fishing rod having at least one first pipe rod and one anti-slipping region on a surface of said pipe rod, said first anti-slipping region being directional such that slip resistance of said anti-slipping region is high in a first direction and low in a second direction opposite to that first direction.

Some fishing rods are formed such that the surface of a grip section or a mounting section for mounting a movable fishing-line guide is made rough for slip prevention. The surface is generally roughened at random; that is, the surface is not directional in roughness.

From US 5,231,783 a fishing rod is known, which has a pipe-like member with a region, which is slip-resistant in one direction. However, in the case of a long fishing rod for a competition called "a pole rod" in Europe, when fish takes the hook, the angler awaiting a hit of fishing under a relatively static state must instantaneously pull out rear pipe rods one after another while drawing the fishing rod towards him. If this pipe rod pull-out operation is slow, then he cannot win the competition. In order to quickly achieve the pipe rod pull-out operation, the pipe rods should not be positively caught by the hand when the fishing rod is drawn towards him, and, in contrast, the pipe rods should be positively caught by the hand when the pipe rods are pulled out.

On the other hand, it is preferable that the movable fishing-line guide can be mounted on the fishing rod with ease, and that the movable fishing-line guide thus mounted is scarcely removed therefrom even when the fishing line is pulled by the weight of a fishing gear or by the fish catching the hook.

Furthermore, in the case of fishing with the fishing rod set on a rod support, it is desirable that the fishing rod is scarcely pulled forwardly by wind or fish, but can be readily pulled towards the angler.

In view of the foregoing, an object of the invention is to improve a fishing rod as indicated above which can enhance the operationability.

The foregoing object of the invention has been achieved by the provision of a fishing rod, in which, according to the invention, a second anti-slipping region provided on the surface of that pipe rod, which is directional in slip resistance in such a manner that slip resistance of said second anti-slipping region is high in said second direction and low in said first direction.

This means that the fishing rod of the invention is high in operability. Further advantageous implementations of the invention are characterized in the subclaims. Preferred embodiments of the invention will be described in the following with reference to the accompanying drawings, wherein:

FIG. 1 is a front view of a fishing rod.

FIG. 2 is an enlarged diagram showing essential parts, particularly anti-slipping regions, of the fishing rod shown in FIG. 1.

FIG. 3 is an enlarged longitudinal sectional view of the part (C) in FIG. 2.

FIG. 4 is an enlarged longitudinal sectional view of another example of the anti-slipping region shown in FIG. 2.

FIG. 5 is an enlarged longitudinal sectional view of another example of the anti-slipping region shown in FIG. 2.

FIG. 6 is an enlarged longitudinal sectional view of another example of the anti-slipping region shown in FIG. 2.

FIG. 7 is an enlarged longitudinal sectional view of another example of the anti-slipping region shown in FIG. 2.

FIG. 8 is an explanatory diagram for a description of the use of the fishing rod according to the invention.

FIG. 9 is a diagram showing another example of the fishing rod.

FIG. 10 is a diagram showing another example of the fishing rod.

FIG. 11 is a diagram showing another example of the fishing rod.

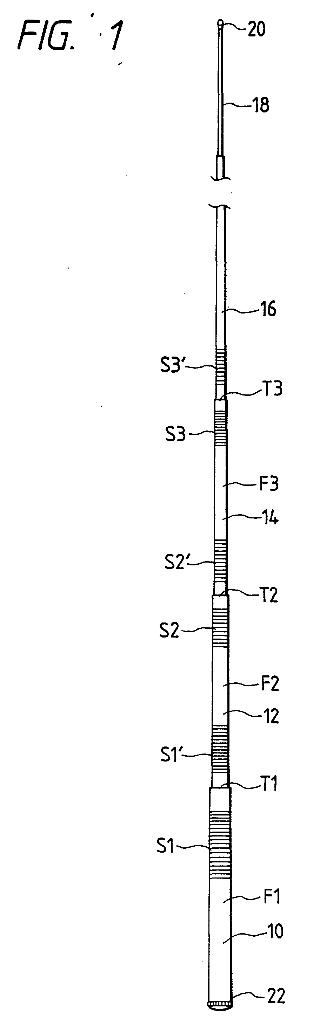

In FIG. 1, reference numeral 10 designates a base rod of the fishing rod. A front ferrule T1 of the base rod 10 is connected to a first intermediate rod 12 in a customary insertion manner; a front ferrule T2 of the latter is connected to a second intermediate rod 14 in the customary insertion manner; a front ferrule of T3 of the latter is connected to a third intermediate rod 16 in the customary insertion manner, and so forth. Reference numeral 18 designates a tip-rod which is the last pipe rod. A tip rod 18 has a fishing-line tying section 20. Reference numeral 22 designates a part of the butt section of the fishing rod.

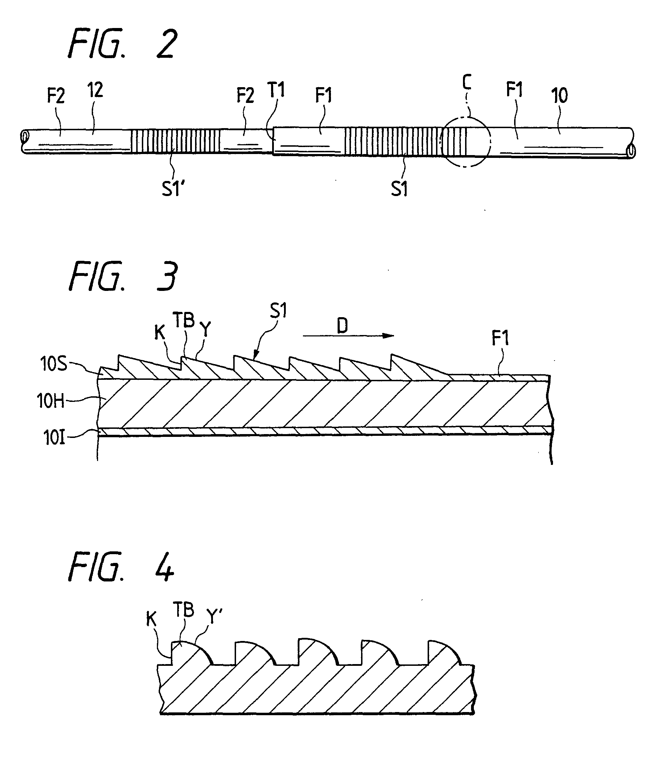

The fishing rod has anti-slipping regions S1, S2 and S3 respectively near the ferrules T1, T2 and T3 of the base rod 10, the first rod 12, and the second rod 14; and anti-slipping regions S1', S2' and S3' respectively near the rear ferrules of the first, second and third intermediate rods. The surfaces of the base rod 10, the first intermediate rod 12, and the second intermediate rod 14 other than the anti-slipping regions are formed into water-repellent surfaces F1, F2 and F3 made for instance by fluorine coat or paint. The anti-slipping region S1 is substantially in the form of saw-tooth waves as shown in FIG. 3. The region S1 is formed such that it resists the movement of the hand in the direction of the arrow D. That is, each of the protrusions TB forming the anti-slipping region S1 is formed by a front slope K which is steep, and a rear slope Y which is gradual.

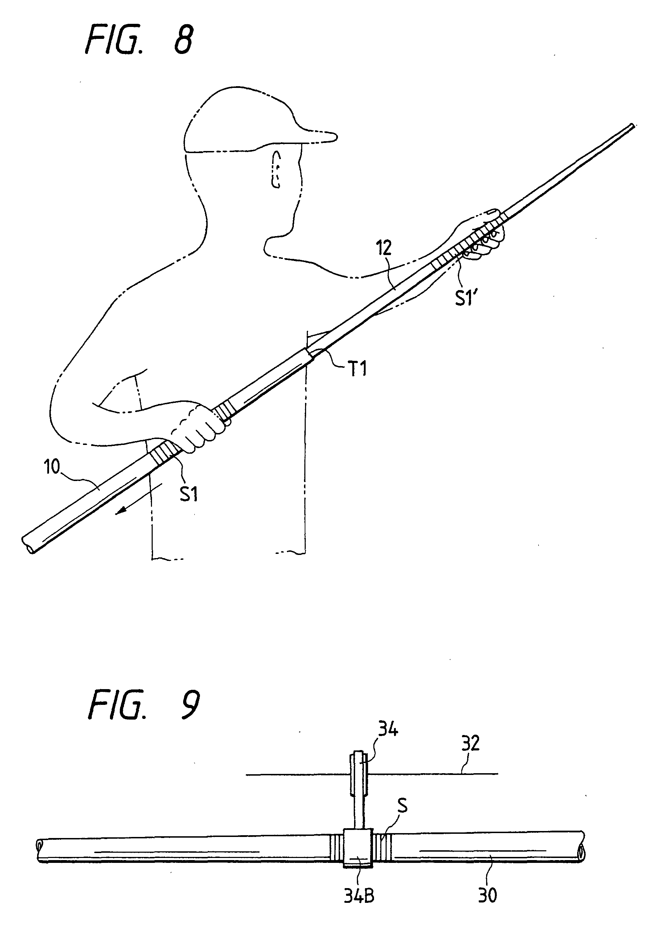

On the other hand, the anti-slipping region S1' of the first intermediate rod 12 is also in the form of saw-tooth waves; however, it is reversely arranged so that it resists the movement of the hand in the direction opposite to the direction of the arrow D. Hence, when the base rod 10 is pulled backward, or in the direction of the arrow, with the anti-slipping region S1' of the first intermediate rod 12 held with the front hand and with the anti-slipping region S1 of the base rod 10 held with the rear hand as shown in FIG. 8, the base rod 10 is quickly and readily disconnected from the first intermediate rod 12. The same things may be said about the anti-slipping regions and the disconnection of the second and third intermediate rods T2 and T3.

The fishing rod described above is of an customary joint type; however, the technical concept of the invention is applicable to a fishing rod of a reverse connection type (opposite to the customary joint type), or of a faucet joint type.

In the case where the hand is slid back and forth with the gripping force made small during the ordinary fishing-rod operation, such back and force movement can be made without hinderance even if the anti-slipping regions are formed as in the above embodiment. In the case where the pipe rods are instantaneously pulled out with a force as in the case of a so-called "pole rod", the anti-slipping regions S1, S2,.... are formed such that they resist the movement of the hand in a predetermined longitudinal direction of the fishing rod (in the backward direction in the embodiment) in order to prevent a pulling-out operation error by the slip of the hand. The fishing rod has the anti-slipping regions before and after each ferrule which are formed such that they are opposite in the direction to each other. However, for instance in the case of the anti-slipping regions S1 and S1', the anti-slipping region S1' may be eliminated.

In addition, in the above-described embodiment the anti-slipping region S1 is formed at one position on the fishing rod; however, it may be divided into plural parts. The direction of slip resistance depends on the way of operating the fishing rod or moving the hands. In the case where the anti-slipping region is formed on the whole pipe rod, the fishing rod may be low in operability. Therefore, it is preferable that the anti-slipping region is formed only on the parts of the rod pipes which are necessarily used in operating the fishing rod. In the above-described embodiment, the regions (surfaces) other than the anti-slipping regions are smooth, thus being low in slipping resistance.

In FIG. 3, reference character 10H designates a body layer of the base rod; 10I, an inner reinforcing layer; and 10S, a surface layer. The surface layer 10S may be of fiber-reinforced plastic material which forms the pipe rod, or it may be formed by resin coating, or may be a layer of ceramics or metal film. The body layer 10H and the reinforcing layer 10I are formed with a fiber-reinforced plastic material.

FIGS. 4 through 7 show other examples of the anti-slipping region which is large in slipping resistance in a particular direction.

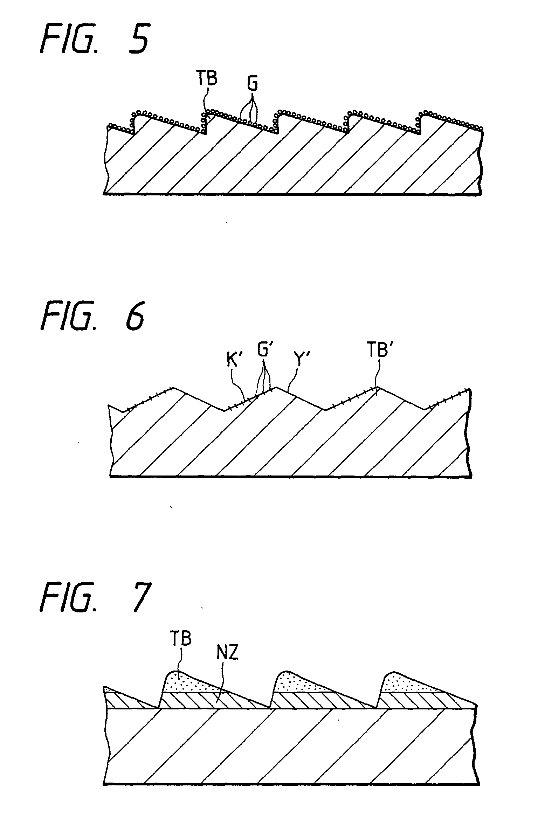

In the case of FIG. 4, each of the protrusions TB is formed by a front slope K which is steep, and a rear slope Y' which is gradually curved. In the case of FIG. 5, the protrusions TB are spray-coated with a paint mixed with suitable particles. In the case of FIG. 6, the protrusions TB are each bisymmetrical in a horizontal direction; however, particles or fluffs G' are implanted in one of the slopes K' and Y' forming each of the protrusions TB; in this case, in the slope K'. Further, one of the slopes may be roughened, or a stripe is wound on it so that the slope higher in slip resistance is formed.

In the case of FIG. 7, in order to improve a touch-feeling of the anti-slipping region, protrusions TB made of a soft material are connected through adhesive agent or tacky layer NZ integrally onto the pipe rod. They may be formed as a seal and bonded onto the pipe rod body.

In the case of FIG. 3 or 5, the saw-tooth-wave-shaped protrusions may be formed by a piece of tightening tape wound on the rod body when the latter is formed by thermal treatment. In this connection, whether the pipe rod should be wound by the piece of tape beginning with the front end or beginning with the rear end, should be determined from the direction in which the movement of the hand is more resistive. In the case of FIG. 3, the pipe rod is wound by a piece of tape beginning with the front end. After the formation of the pipe rod raw material in this manner, the tape is removed, and then suitable parts of the surface of the pipe rod raw material are masked. The pipe rod raw material thus processed is surface-treated, for instance, by buffing, so as to form the saw-tooth-wave-shaped protrusions on suitable parts of the pipe rod. In addition, the protrusions may be formed by printing such as screen printing, coating, or machining.

FIG. 9 shows an application of the invention which is developed to mount a movable fishing-line guide 34 on its mounting position. The tip rod is on the left side of the pipe rod 30. In order to eliminate the difficulty that a load, such as fish, applied to the fishing line 32 moves the base portion 34B of the movable fishing-line guide 34 toward the tip rod, an anti-slipping region S is formed at the mounting section. The anti-slipping region S is in the form of saw-tooth waves which is equal in slip resistance direction to the anti-slipping regions S1' shown in FIG. 1; that is, it is opposite to the one shown in FIG. 3. In this case, the movable fishing-line guide 34 can be smoothly slid to the anti-slipping region S when moved away from the tip rod, and after mounted in the region S, it is difficult to move the movable fishing-line guide 34 towards the tip rod; that is, it is stably held in place.

In addition, in order to modify the fishing rod so that it is difficult for the base 34B of the movable fishing-line guide to slide towards the tip rod, and it is ready to move the base 34B towards the base rod when it is to be mounted on the fishing rod, the examples of the anti-slipping region as shown in FIGS. 4 to 7 may be employed. In the case where the anti-slipping region shown in FIG. 7 is employed, the protrusions TB are soft and flexible being made of rubber or the like, and therefore the base 34B of the movable fishing-line guide can be positively mounted on the pipe rod.

In the formation of the anti-slipping region, circumferentially-directed fibers of the outer layer of the pipe rod body may be exposed. In this case, if some longitudinally-directed fibers exist on the outer cylindrical surface, then such fibers resist the turning of the movable fishing-line guide 34; that is, owing to those fibers the movable fishing-line guide 34 can be more positively mounted on the fishing rod.

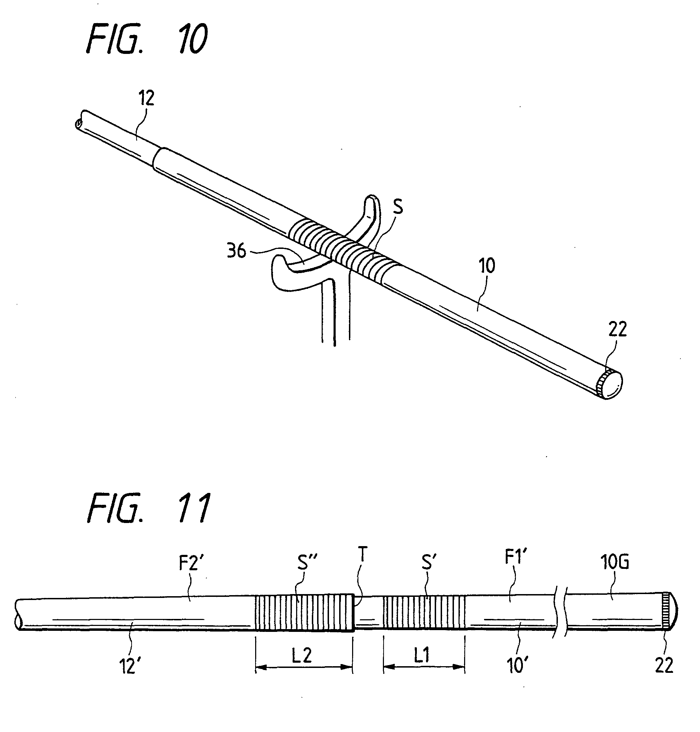

FIG. 10 shows a fishing rod in which its base rod 10 has an anti-slipping region S so that the fishing rod may not be moved by wind or a fish in the case where the angler has left the fishing rod and the latter is supported on a fishing rod support 36. In the case where, in this connection, the anti-slipping region S is in the form of saw-tooth waves, the slip resistance direction is set as shown in FIG. 3, so that the anti-slipping region resists the movement of the fishing rod towards the tip. When the angler pulls the fishing rod towards himself, the slip resistance is small; that is, he can readily pull the fishing rod towards himself. In this case, it goes without saying that, besides the anti-slipping region which is in the form of simple saw-tooth waves (FIG. 3), the anti-slipping regions as shown in FIGS. 4 through 7 may be employed. Moreover, the anti-slipping region may be on the lower side of the part of the fishing rod which is brought into contact with the rod support 36, or the lower side may be flattened. Furthermore, it goes without saying that the anti-slipping region S may be formed on the intermediate rod 12. The surface of the pipe rod other than the anti-slipping regions S is made water-repellent, being fluorine-coated for instance.

FIG. 11 shows another example of the fishing rod according to the invention. As shown in FIG. 11, the first intermediate rod 12' is connected to the base rod 10' in an reverse insertion manner opposite to the customary insertion manner. Before and after the ferrule T' of the fishing rod, water-repellent rough surfaces S" and S' are provided which are formed by using a water-repellent material such as fluorine and silicon and, when necessary, combined with a lubricant material. The water-repellent rough surface S' is shaped the same as the anti-slipping region S1 in FIG. 1, and the water-repellent rough surface S" is shaped the same as the anti-slipping region S1' of FIG. 1. The lengths L1 and L2 of the water-repellent rough surfaces S' and S" are both, for instance, of the order of 20 cm to 50 cm, and the length of the base rod 10' is at least 100 cm. In FIG. 11, reference character 10G denotes the grip of the fishing rod. The other surface regions F1' and F2' are formed by coating with a water-repellent material, or the one which is prepared by mixing the above-described water-repellent material with the above-described lubricant material as the case may be.

As was described above, the whole surface of each of the pipe rods is made water-repellent, and therefore the fishing rod is rather difficult to wet with water, and is high in sliding characteristic. Hence, even if the fishing rod is wetted with water, the hand holding it lightly can be readily moved back and forth. However, in the case where the water-repellent rough surface is held strongly with the hand, because of the presence of the rough surface the slide resistance is high. Hence, in the above-described embodiment (FIG. 11), a force can be readily applied to pull the base rod out of the first intermediate rod. Hence, the embodiment is suitable for the case when the length of the fishing rod is adjusted by instantaneously shifting the base rod 10' from the first intermediate rod 12' by pulling it, or for the case where the base rod 10' is instantaneously pulled out of the first intermediate rod 12'. The roughness of the above-described rough surfaces is, in general, of the order of several microns to several hundreds of microns. The same thing can be said about the other embodiments.

The above-described embodiment may be applied to the regions before and after the joint of the first and second intermediate rods, and the region before and after the joint of the second and third intermediate rods, and so forth.

Examples of the water-repellent rough source are as follows. That is, they may be obtained by subjecting the anti-slipping regions shown in FIGS. 4 through 7 to water-repellent treatment. Alternatively, the water-repellent rough surface may be obtained by spraying the anti-slipping regions with water-repellent paint mixed with particle, or by roughing the surface of a pipe rod of water-repellent material by rough polishing. Hence, examples of the water-repellent rough source include those which are other than is directional in slip resistance as shown in FIGS. 3 through 7. Hence, when the fishing rod is operated with the hand gripping it, the hand can be readily slide longitudinally of the fishing rod; and the pipe rod can be pulled out or slid by gripping the fishing rod strongly to increase the slide resistance.

As is apparent from the above description, in the fishing rod of the invention, its slide resistance is directional. Hence, in the use of a pole rod, a floating fishing-line guide, or a rod support, the fishing rod is high in operability.

## Claims

1. A fishing rod having at least one first pipe rod with one anti-slipping region provided on a surface of said pipe rod, said anti-slipping region being directional such that slip resistance of said anti-slipping region is high in a first direction and low in a second direction opposite to said first direction **characterized in that** at least a second anti-slipping region is provided on said first rod pipe, said second anti-slipping region is directional such that the slip resistance of said second anti-slipping region is high in said second direction and low in said first direction.

2. A fishing rod according to claim 1, **characterized in that** said first direction is a direction from a base to a tip of said fishing rod.

3. A fishing rod according to claim 1, **characterized in that** said first direction is a direction from a tip to a base of said fishing rod.

4. A fishing rod according to at least one of the claims 1 to 3, **characterized in that** said anti-slipping region is provided to a front ferrule of said pipe rod.

5. A fishing rod according to at least one of the claims 1 to 4, **characterized in that** said second anti-slipping region is provided on a second rod pipe connected to said front ferrule of said first pipe rod, said second anti-slipping region is adjacent to a rear ferrule of said second pipe rod and directional such that slip resistance of said second anti-slipping region is high in said second direction and low at said first direction.

6. A fishing rod according to at least one of the claims 1 to 5, **characterized in that** said anti-slipping region has a water repellent property.

## Patentansprüche

1. Angelrute, die zumindest einen ersten Rohrstab mit einem Antischlupfbereich, vorgesehen auf einer Oberfläche des Rohrstabes, aufweist, wobei der Antischlupfbereich gerichtet ist, derart, daß der Schlupfwiderstand des Antischlupfbereiches hoch ist in einer ersten Richtung und niedrig ist in einer zweiten Richtung, die der ersten Richtung entgegengesetzt ist, **dadurch gekennzeichnet**, daß zumindest ein zweiter Antischlupfbereich auf dem ersten Rohrstab vorgesehen ist, wobei der zweite Antischlupfbereich gerichtet ist, derart, daß der Schlupfwiderstand des zweiten Schlupfbereiches hoch ist in der zweiten Richtung und niedrig ist in der ersten Richtung.

2. Angelrute nach Anspruch 1, **dadurch gekennzeichnet**, daß die erste Richtung eine Richtung von einer Basis zu einer Spitze der Angelrute ist.

3. Angelrute nach Anspruch 1, **dadurch gekennzeichnet**, daß die erste Richtung eine Richtung von einer Spitze zu einer Basis der Angelrute ist.

4. Angelrute nach zumindest einem der Ansprüche 1 bis 3, **dadurch gekennzeichnet**, daß der Antischlupfbereich an einem vorderen Endring des Rohrstabes vorgesehen ist.

5. Angelrute nach zumindest einem der Ansprüche 1 bis 4, **dadurch gekennzeichnet**, daß der zweite Antischlupfbereich an einem zweiten Rohrstab vorgesehen ist, verbunden mit dem vorderen Endring des ersten Rohrstabes, wobei der zweite Antischlupfbereich benachbart zu einem hinteren Endring des zweiten Rohrstabes vorgesehen und gerichtet ist, derart, daß der Schlupfwiderstand des zweiten Antischlupfbereiches hoch ist in der zweiten Richtung und niedrig ist in der ersten Richtung.

6. Angelrute nach zumindest einem der Ansprüche 1 bis 5, **dadurch gekennzeichnet**, daß der Antischlupfbereich eine wasserabweisende Eigenschaft aufweist.

## Revendications

1. Canne à pêche ayant au moins un premier brin de canne présentant une région antidérapante réalisée sur une surface dudit brin de canne, ladite région antidérapante étant directionnelle, de sorte que la résistance au dérapage de ladite région antidérapante est élevée dans une première direction et faible dans une seconde direction opposée à ladite première direction,
caractérisée en ce qu'au moins une seconde région antidérapante est réalisée sur ledit premier brin de canne, en ce que ladite seconde région antidérapante est- directionnelle, de sorte que la résistance au dérapage de ladite seconde région antidérapante est élevée dans ladite seconde direction et faible dans ladite première direction.

2. Canne à pêche selon la revendication 1, caractérisée en ce que ladite première direction est une direction allant du talon vers le scion de ladite canne à pêche.

3. Canne à pêche selon la revendication 1, caractérisée en ce que ladite première direction est une direction allant du scion au talon de ladite canne à pêche.

4. Canne à pêche selon au moins l'une des revendications 1 à 3, caractérisée en ce que ladite région antidérapante est réalisée sur une virole avant dudit brin de canne.

5. Canne à pêche selon au moins l'une des revendications 1 à 4, caractérisée en ce que ladite seconde région antidérapante est réalisée sur un second brin de canne relié à ladite virole avant dudit premier brin de canne, en ce que ladite seconde région antidérapante est adjacente à une virole arrière dudit second brin de canne et est directionnelle, de sorte que la résistance au dérapage de ladite seconde région antidérapante est élevée dans ladite seconde direction et faible dans ladite première direction.

6. Canne à pêche selon au moins l'une des revendications 1 à 5, caractérisée en ce que ladite région antidérapante possède une propriété hydrophobe.
